# EUROPÄISCHE PATENTSCHRIFT

(11) **EP 1 199 449 B1**
(45) Veröffentlichungstag und Bekanntmachung des Hinweises auf die Patenterteilung: **14.06.2006**
(21) Anmeldenummer: 01124934.9
(22) Anmeldetag: 19.10.2001
(51) Int. Cl.: F01N 3/20

(54) **Verwendung von flüssigem Ammoniak in Abgaskatalysatorsystemen von Verbrennungsmotoren**
Use of liquid ammonia in exhaust catalyst systems of internal combustion engines
Utilisation d'ammoniac liquide dans des systèmes de catalyseur pour gaz d'échappement de moteurs à combustion interne

(30) Priorität: 20.10.2000 DE 10052378; 20.10.2000 DE 10052377; 27.10.2000 DE 10053515
(43) Veröffentlichungstag der Anmeldung: 24.04.2002
(73) Patentinhaber: Air Liquide Deutschland GmbH, 40235 Düsseldorf (DE); Messer Group GmbH, 65843 Sulzbach (DE)
(72) Erfinder: Barbe, Joachim, 47918 Tönisvorst (DE); Bayer, Gesa, 41564 Kaarst (DE); Gerling, Helmut, 47447 Moers (DE); Kesten, Martin, 51503 Rösrath (DE); Pongraz, Johann, 47259 Duisburg (DE)
(74) Vertreter: Kahlhöfer, Hermann

(56) Entgegenhaltungen:
- EP-A- 0 381 236
- WO-A-83/00057
- WO-A-97/39226
- DE-C- 763 658
- PATENT ABSTRACTS OF JAPAN vol. 013, no. 133 (M-809), 4. April 1989 (1989-04-04) & JP 63 302120 A (NIPPON SHOKUBAI KAGAKU KOGYO CO LTD), 9. Dezember 1988 (1988-12-09)

## Beschreibung

Die Erfindung betrifft ein Ammoniak-Versorgungssystem für Abgaskatalysatorsysteme für Kraftfahrzeuge und ein Verfahren zu dessen Betrieb, eine Entnahmevorrichtung und ein Ventilsystem für flüssiges Ammoniak in einem Ammoniak-Versorgungssystem, einen Vorratsbehälter für flüssiges Ammoniak und die Verwendung von flüssigem Ammoniak bei Abgaskatalysatoren.

Zur NOₓ -Reduzierung in Abgasen wird heute Harnstoff als wässrige Lösung eingesetzt. Diese Harnstofflösung zerfällt bei Erhitzen in Ammoniak und Kohlendioxid. Der Ammoniak dient dazu die NOₓ -Verbindungen mit Hilfe eines Katalysators in Stickstoff und Wasser umzuwandeln. Diese Technik ist unter dem Namen Sinox-System bekannt.

Neben diesem System ist die Umsetzung von Ammoniumcarbamat aus der DE 198 27 678 A1 zu Ammoniak und Kohlendioxid bekannt. Das Carbamat wird hierbei als festes Pulver eingesetzt und unter Wärmeeinwirkung zersetzt.

Weiterhin ist aus der WO 83/00057 A1 ein Verfahren zur Reduktion des Stickoxidanteils im Abgas von Verbrennungskraftmaschinen bekannt, bei dem flüssiges Ammoniak zugegeben wird.

Es besteht die Aufgabe, eine alternative und sichere Quelle für Ammoniak für Abgaskatalysatorsysteme in Kraftfahrzeugen bereitzustellen.

Der Erfindung liegt die weitere Aufgabe zugrunde, ein einfaches und sicheres System und Verfahren zu schaffen, womit Flüssiggase, insbesondere flüssiges Ammoniak sicher entnommen, gehandhabt und der Verbrauch ersetzt werden kann.

Gelöst wurde die Aufgabe durch ein Ammoniak-Versorgungssystem für Abgaskatalysatorsysteme für Kraftfahrzeuge mit den in Anspruch 1 beschriebenen Merkmalen.

Das Ammoniak-Versorgungssystem für Abgaskatalysatorsysteme für Kraftfahrzeuge enthält eine Quelle für flüssiges Ammoniak. Im allgemeinen wird ein Vorratsbehälter (Speicherbehälter) mit flüssigem Ammoniak als Quelle für flüssiges Ammoniak eingesetzt. Der Vorratsbehälter ist in der Regel ein Druckgasbehälter und ist vorzugsweise austauschbar.

Das Ammoniak-Versorgungssystem weist in der Regel eine Entnahmevorrichtung für flüssiges oder gasförmiges Ammoniak auf. Die Entnahmevorrichtung ist gewöhnlich im Bereich der Quelle für flüssiges Ammoniak angeordnet. Die Entnahmevorrichtung ist vorzugsweise ein Ventilsystem, das eine An- und Abkoppelung der Quelle für flüssiges Ammoniak mit einem minimalen Austritt von Ammoniak an die Umgebung erlaubt. Das bevorzugte Ventilsystem für austauschbare Vorratsbehälter mit flüssigem Ammoniak weist eine Absperrfunktion und eine Koppelfunktion auf.

Das Ventilsystem besteht vorteilhaft aus einem sogenannten Anschlußventil und einem sogenannten Behälterventil. Die Ventile werden trennbar gekoppelt. Das Anschlußventil ist mit dem Ammoniakverbraucher (der Ammoniak-Zuführung des Katalysatorsystems) verbunden, das Behälterventil ist an dem Vorratsbehälter für flüssiges Ammoniak direkt angeordnet. Das Behälterventil dient in der Regel als Entnahmeventil und Füllventil. Der Querschnitt des Ventils ist vorzugsweise so bemessen, daß kurze Füllzeiten bei der Befüllung der Vorratsbehälter ermöglich sind. Das Behälterventil wird in der Regel in die Behälteröffnung geschraubt, kann aber auch durch Verschweißung befestigt werden. Das Ventilsystem erlaubt den problemlosen und sicheren Austausch des Vorratsbehälters, wobei praktisch kein Flüssiggas bei dem Behälterwechsel in die Umgebung gelangt. Der Übergang zwischen Anschlußventil und Behälterventil ist so gestaltet, daß nur ein minimaler Totraum zwischen den gekoppelten Ventilen besteht. Das Ventilsystem ist für andere Flüssiggase vorteilhaft einsetzbar. Die Kopplung (Verbindung) von Anschlußventil und Behälterventil kann direkt z. B. durch eine Verschraubung erfolgen. Bevorzugt wird eine indirekte Verbindung mittels eines Führungssystems, mit dessen Hilfe die Anschlußteile (Anschlußflächen) der Ventile zusammengeführt und gehalten werden.

Im Gegensatz zu den bekannten Schnellschlußventilen, die im gekuppelten Zustand immer offen sind, stellt das bevorzugte Ventilsystem eine sichere Verbindung bei beidseitig geschlossenen Verbindungsteilen (das heißt Behälter- und Anschlußventil bzw. Anschlußleitung) her. Das Ventilsystem läßt beim Entkoppeln praktisch keine Flüssigphase austreten. Ferner kann das Ventilsystem vom Nichtfachmann sicher bedient werden.

Das Anschlußventil weist neben einem Absperrorgan vorteilhaft ein Element zum Öffnen des Behälterventils auf. Das Anschlußventil, das gleichermaßen für flüssiges und gasförmiges Ammoniak einsetzbar ist, enthält in der Regel einen zentralen Kanal für das Ammoniak, der sich am Ventileingang im Querschnitt verbreitert. Im Bereich des Überganges zu dem verbreiterten Querschnitt des Kanales ist der Ventilsitz angeordnet. In dem Kanal ist ein stiftförmiges Element angeordnet, das am Ende (im Bereich des Einganges des Kanals) das Schließelement trägt. Das Schließelement bildet einen flachen Kopf, der gegen den Ventilsitz gedrückt, den Kanal abdichtet. Das Schließelement weist im allgemeinen eine Dichtung, insbesondere einen Dichtring, auf der dem Ventilsitz zugewandten Seite auf. Stiftförmiges Element und Schließelement sind so bemessen, daß in dem Kanal und dem Eingangsbereich ein freier Raum (Spalt) vorhanden ist, durch den das Ammoniak strömen kann. In geschlossenem Zustand des Anschlußventiles liegen die Au-ßenseite des Schließelementes und die Kopplungsfläche (Anschlußfläche) des Anschlußventiles vorzugsweise in einer Ebene. Stiftförmiges Element und Schließelement bilden zusammen einen Öffner (Stößel) für das angekoppelte Behälterventil. Das Anschlußventil wird vorzugsweise elektromechanisch oder pneumatisch betätigt. Vorteilhaft ist ein automatischer Betrieb des Anschlußventiles, insbesondere gesteuert durch eine Steuereinheit wie eine zentrale Steuereinheit des Katalysatorsystems. Das bevorzugte Anschlußventil wird nicht wie bei herkömmlichen selbstschließenden Schnellschlußventilen automatisch das Behälterventil öffnen, sondern dies geschieht erst durch die elektrische oder pneumatische Ansteuerung. Das heißt das Behälterventil ist immer nur dann geöffnet, wenn Ammoniak entnommen werden soll. Bei einem Kraftfahrzeug bedeutet dies immer nur dann, wenn das Fahrzeug in Betrieb ist. Bei einem Unfall (z.B. wenn der Airbag ausgelöst wird oder wenn das Fahrzeug zum Stillstand kommt) oder bei einer Undichtigkeit (die z.B. durch ein Sensor registriert wird) kann automatisch das Ventil (wie auch das Ventilsystem) geschlossen werden und eine sicheres Betreiben der Entnahme wird hierdurch gewährleistet.

Für die Flüssigentnahme (bei aufrecht stehend eingesetztem oder einzusetzendem Vorratsbehälter) ist das Behälterventil in der Regel mit einem Steigrohr verbunden. Das für die Flüssigentnahme bevorzugte Behälterventil ist so aufgebaut, daß in geöffnetem Zustand der Ventilausgang eine direkte Verbindung mit dem Steigrohr zur Flüssigphase im Vorratsbehälter vorliegt und die Verbindung zur Gasphase im Vorratsbehälter unterbrochen ist, in geschlossenem Zustand der Ventilausgang abgesperrt und die Verbindung zum Steigrohr unterbrochen wird, wobei eine Verbindung des inneren Ventilraumes mit der Gasphase (Gasraum) des Vorratsbehälters hergestellt wird, so daß Ammoniak über diese Verbindung in den Vorratsbehälter zurückfließen kann. Dies wird erreicht durch einen Schließkörper mit einem oberen und unteren Schließelement, wobei ein Verbindungsweg zwischen der Außenseite des Schließkörpers und dem Zentrum des unteren Schließelementes angelegt ist. Beispielsweise wird der Verbindungsweg im Schließkörper durch eine zentrale Öffnung im unteren Schließelement und einem Kanal zu einer oder mehreren seitlichen Öffnungen des Schließkörpers gebildet. Der Verbindungsweg kann auch durch einen porösen oder durchlässigen Bereich im Schließkörper gebildet werden. Über den Verbindungsweg gelangt flüssiges Ammoniak bei geöffnetem Behälterventil in den Ventilraum, der zum Ventilausgang führt. Der Ausgangskanal des Behälterventiles wird vorteilhaft bis auf einen Spalt von einem Fortsatz des oberen Schließelementes ausgefüllt, wodurch der Totraum minimiert wird.

Das Behälterventil kann für die Entnahme von gasförmigem Ammoniak aus dem Vorratsbehälter ähnlich wie das Behälterventil für die Flüssigentnahme aufgebaut sein, wobei das Steigrohr entfällt und der Kanal im Schließkörper überflüssig ist.

Der Vorratsbehälter (Behälter) ist vorzugsweise ein austauschbarer Druckbehälter für flüssiges Ammoniak. Die Behälter sind in der Regel zylindrisch aufgebaut. Vorteilhaft sind Boden und Oberseite der Behälter nach außen gewölbt. Der Behälter weist ein Ventil (Behälterventil) auf, das zur Entnahme von verdampftem Flüssiggas aus der Gasphase (Gasraum) des Behälters oder zur Entnahme von flüssigem Flüssiggas aus der Flüssigphase (Flüssigkeitsraum) des Behälters ausgelegt ist. Das Behälterventil ist in der Regel in der Mitte der Behälteroberseite (in der Längsachse des Behälters) angeordnet. Vorteilhaft ist der Behälter an der Oberseite zentral (mittig) mit einer Vertiefung oder Mulde ausgestattet, worin das Ventil angeordnet ist. Ein Behälter für die Flüssigentnahme weist vorteilhaft eine zentrale Vertiefung oder Mulde im Bodenbereich des Behälters auf, in die ein mit dem Behälterventil verbundenes Steigrohr hineinreicht, so daß Flüssigphase nahezu vollständig aus dem Vorratsbehälter entnommen werden kann.

Der Vorratsbehälter besteht im allgemeinen aus Kunststoff, Metall (z. B. Aluminium, Stahl, vorzugsweise aus Edelstahl) oder ist ein Komposit-System (z. B. Metallbehälter mit faserverstärkter Kunststoffschale). Bei einem Behälter aus Edelstahl erfolgt die Herstellung zur Erhöhung der Festigkeit vorteilhaft durch Kaltverformung, z.B. mit flüssigem Stickstoff. Der austauschbare Vorratsbehälter hat vorzugsweise einen Außendurchmesser zwischen 270 und 300 mm, eine Behälterhöhe zwischen 350 und 380 mm und ein Fassungsvermögen von ca. 20 Litern.

Vorteilhaft wird der Behälter mit einem abnehmbaren Ring oder einem abnehmbaren schalenartigen Aufsatz im Kopfbereich ("Kopfring") und im Bodenbereich ("Fußring") ausgestattet. Kopf- und Fußring sind in der Regel aus Metall oder Kunststoff, vorzugsweise aus Kunststoff. Kopf- und Fußring werden vorteilhaft "einrastend" oder "einschnappend" auf den Behälter aufgesteckt. Zu diesem Zweck weist der Behälter vorteilhaft eine umlaufende Verengung oder Einschnürung (z. B. v-förmige Rille im Schulter- und Fußbereich des Behälters) auf. In diese Verengung kann ein entsprechend geformtes Teil des Kopf- und Fußringes beim Aufstecken greifen. Der austauschbare Druckbehälter wird vorteilhaft ähnlich wie ein Getränkebehälter aufgebaut, wie er in DE 197 23 114 A1 beschrieben ist.

Ammoniak wird in flüssiger Form im Behälter gespeichert. Aufgrund seiner physikalischen Eigenschaften ist in der Gasphase (d.h. im Gasraum über der Flüssigkeit im Behälter) nur ein sehr geringer Massenanteil vorhanden. Z.B. in einem 20 Liter Behälter sind bei 20 °C in der Gasphase nur 0,018 kg und in der Flüssigphase 10,59kg NH₃ bei einer Gesamtmenge von 10,6 kg enthalten. Wird Gas aus dem Vorratsbehälter entnommen, muss sofort nachverdampft werden, da sonst der Druck in dem Vorratsbehälter zusammenbrechen würde. Beispiel: Bei einem max. Verbrauch 1000 g/h = 16,6 g/min, bei 20 °C Behältertemperatur wäre bereits nach 65 s die gasförmig vorhandene Menge verbraucht, wenn kein Ammoniak nachverdampft werden würde. Bei einem für die Entnahme von gasförmigem Ammoniak vorgesehenen Vorratsbehälter ist daher eine interne oder externe Vorrichtung für eine Wärmezuführung erforderlich.

Bei einem Vorratsbehälter könnte die Wärme direkt von außen zugeführt werden. Dies ist jedoch im Falle von Ammoniak nur bedingt möglich, da die zu Verfügung stehende aktive Heizfläche (mit Flüssigkeit berührte oder benetzte Fläche) bei zunehmendem Verbrauch immer kleiner wird und einfache Systeme wie z.B. eine Erwärmung mit Luft nicht ausreichen, um die erforderliche Wärmemenge dem System zuzuführen.

Eine Lösung, die erforderliche Wärmemenge in das System einzubringen besteht darin, am Boden des Vorratsbehälters eine Wärmeübertragungsfläche, z.B. eine Fläche mit Rippen, einzubauen, die die erforderliche Wärmemenge übertragen kann.

Als bevorzugte Lösung wird ein elektrisches Heizelement außen oder innerhalb des Vorratsbehälters angeordnet. Bei der elektrischen Heizung muss jedoch besonderer Augenmerk auf einen Überhitzungsschutz gelegt werden. Damit das Ammoniak vollständig entnommen werden kann, muss die Heizung im Bodenbereich angebracht werden. Vorteilhaft ist ein integriertes Heizelement, welches direkt im oder am Boden angebracht ist. Vorteilhaft sind Temperaturfühler im Behälterinneren im Bodenbereich angebracht. Dadurch wird sichergestellt, daß die Temperatur der Flüssigkeit im Behälter nicht über die zulässige Temperatur von 70 °C ansteigt. Ein zweiter Temperaturfühler zur Absicherung ist vorteilhaft. Die Temperaturfühler werden insbesondere über eine Regelung so abgesichert, daß bei einem Fühlerbruch oder einer Funktionsstörungen oder beim Schließen des Behälterventils die Heizung komplett abgestellt wird. Ein steckbarer Anschlußkopf für Heizelement und Temperaturfühler und ferner eine Führungsschiene für eine verdrehsichere Einführung des Vorratsbehälters in eine Halterung am Kraftfahrzeug sind für einen Vorratsbehälteraustausch vorteilhaft.

Bei der Entnahme von flüssigem Ammoniak ist die vorhandene Wärme ausreichend, um die Gasmenge zu verdampfen, die zum Druckaufbau bei der Entnahme der Flüssigkeit (Flüssigphase) erforderlich ist.

Bei der Flüssigentnahme wird das flüssige Ammoniak einem dem Anschlußventil nachgeschalteten, im Kraftfahrzeug fest installierten Verdampfer (Heizelement) zugeführt. Die benötigte Wärme wird vorzugsweise nicht elektrisch aufgebracht, sondern über den Kühlkreislauf des Kraftfahrzeugs (insbesondere LKW). Dies hat den Vorteil, das kein zusätzlicher Kraftstoffverbrauch für eine elektrische Heizleistung benötigt wird. In der Leitung zwischen Anschlußventil und Verdampfer ist vorzugsweise ein Rückschlagventil angeordnet. Nach dem Verdampferausgang wird vorzugsweise ein Druckregler, insbesondere ein beheizbarer Druckregler und darauf folgend ein Absperrventil in der Entnahmeleitung angeordnet. Von dem Ausgang des Absperrventiles wird das gasförmige Ammoniak einem Abgaskatalysatorsystem zugeführt.

Die Besonderheiten des bevorzugten Flüssiggasversorgungssystems werden zusammengefaßt:
- selbstschließendes Behälterventil mit minimiertem Totraumvolumen und maximalem Querschnitt für die Befüllung und mit integriertem Entlastungsventil,
- Flüssigphase wird beim Schließen der Ventilkombination über das Entlastungsventil vollständig in den Behälter zurückgeführt,
- Entnahmeanschluß (Anschlußventil) mit pneumatischer oder elektrischer Ansteuerung mit integriertem Ventil totraumoptimiert,
- Behälter mit innenliegendem Behälterventil und Steigrohr,
- Behälter mit bestimmten Abmessungen, Material (Edelstahl, Aluminium, Eisen, Kompositsystem),
- halb- oder vollautomatisches Behälter-Anschlußsystem,
- Wärmetauscher mit Beheizung über Kühlsystem eines Lkw oder elektrisch betriebener Wärmetauscher,
- beheizbarer Druckminderer (z.B. Druckminderer in Kombination mit Wärmetauscher).

Vorratsbehälter mit flüssigem Ammoniak, Ventilsystem und, bei Flüssigentnahme, der Verdampfer bilden die Hauptkomponenten eines Ammoniak-Versorgungssystems, das z.B. in bekannten Abgaskatalysatorsystemen für Kraftfahrzeuge, insbesondere Lastkraftwagen, anstelle der konventionellen Quellen für gasförmiges Ammoniak mit Vorteil eingesetzt wird.

Das Ammoniak-Versorgungssystem erlaubt eine sichere Betriebsweise und eine leichte Handhabung beim Tausch des Vorratsbehälters.

Die Erfindung wird anhand der Zeichnung erläutert.
Fig. 1 zeigt ein Behälterventil für Flüssigkeitsentnahme im Längsschnitt.
Fig. 2 zeigt schematisch ein Anschlußventil.
Fig. 3 zeigt das Ventilsystem mit gekoppeltem Anschlußventil und Behälterventil.
Fig. 4 zeigt einen Vorratsbehälter für die Entnahme von flüssigem Ammoniak (Längsschnitt).
Fig. 5 zeigt eine Aufnahmevorrichtung mit austauschbaren Vorratsbehältern.
Fig. 6 zeigt ein Schema eines Flüssiggasversorgungssystems mit Flüssigkeitsentnahme zur Ammoniakversorgung von Katalysatorsystemen in Kraftfahrwagen.
Fig. 7 zeigt ein Schema eines Flüssiggasversorgungssystems mit Gasentnahme zur Ammoniakversorgung von Katalysatorsystemen in Kraftfahrwagen.
Fig. 8 zeigt einen Vorratsbehälter für die Entnahme von gasförmigem Ammoniak (Schema).
Fig. 9 zeigt eine Aufnahmevorrichtung mit austauschbaren Vorratsbehältern für gasförmige Entnahme.

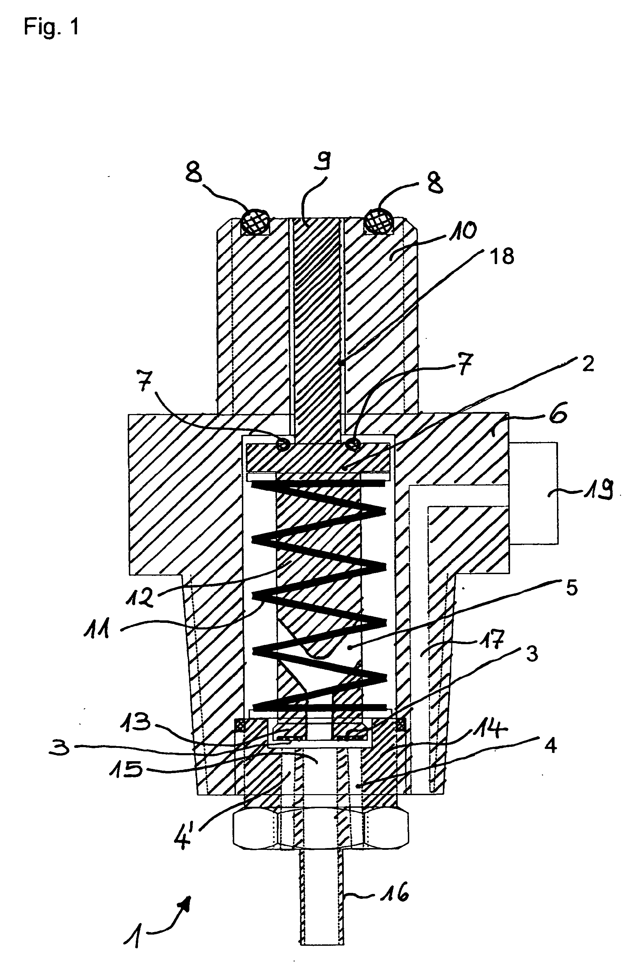

Das in Fig. 1 gezeigte Behälterventil 1 für Flüssigkeitsentnahme weist einen zylindrisch geformten Grundkörper 6 mit einem axialen Kanal und Raum (Ventilraum) auf, in dem der Schließkörper 12 mit oberem Schließelement 2 und unterem Schließelement 13 angeordnet ist. Das Schließelement 2 weist einen oberen zylindrischen Teil 9 (Fortsatz des oberen Schließelementes 2) auf, der im Kopfteil 10 des Grundkörpers in einer zylindrischen Öffnung geführt ist. Kopfteil 10 kann in der Länge auf ein Minimum reduziert werden oder sogar ganz entfallen. Zwischen dem zylindrischen Teil 9 und Kopfteil 10 besteht ein enger Spalt 18 mit minimalem Totraum. Das Schließelement 2 ist ein verbreitertes (plattenförmiges) Teil, das an der Oberseite ein Dichtelement 7 trägt. Es folgt ein Teil 12 des Schließkörpers (Mittelteil zwischen oberem und unterem Schließelement) mit verringertem Querschnitt, in dessen Bereich eine Druckfeder 11 angeordnet ist. Das untere Schließelement 13 trägt an der Unterseite das Dichtelement 3. Mindestens eine Öffnung 5 führt von der Seite des Mittelteiles 12 über einen Kanal durch den Schließkörper zu einer zentralen Öffnung an der Unterseite des unteren Schließelementes 13. Am unteren Ende des Grundkörpers 6 befindet sich eine Abschlußkappe 14 mit mindestens einer Öffnung 4 (gezeigt sind 2 Öffnungen 4 und 4') und einer zentralen Öffnung 15, an die sich das Steigrohr 16 anschließt.

Das Totvolumen der bevorzugten Ausführung des Behälterventils liegt im Bereich zwischen 0,01 und 1 ml (siehe Fig. 1, Spalt 18), im besonderen zwischen 0,01 und 0,4 ml, wobei der Durchflußquerschnitt mindestens 7 mm² , vorzugsweise zwischen 8 und 20 mm² , insbesondere zwischen 8 und 12 mm² liegt. Das bedeutet, die Bohrung im Ventil liegt im Bereich zwischen 5 und 7 mm, vorzugsweise bei zwischen 5,5 und 6,5 mm.

Der Dichtring 3 am unteren Schließelement 13 schließt bei geöffnetem Behälterventil die Öffnungen 4, 4' (eine oder mehrere im Umfang verteilt) ab. Somit wird nur der Durchgang für die Flüssigphase über das Steigrohr 16 freigegeben. Der Schließkörper 12 weist hierfür die entsprechenden Bohrungen 5 auf. Auch hier können eine oder mehrere Bohrungen angebracht sein.

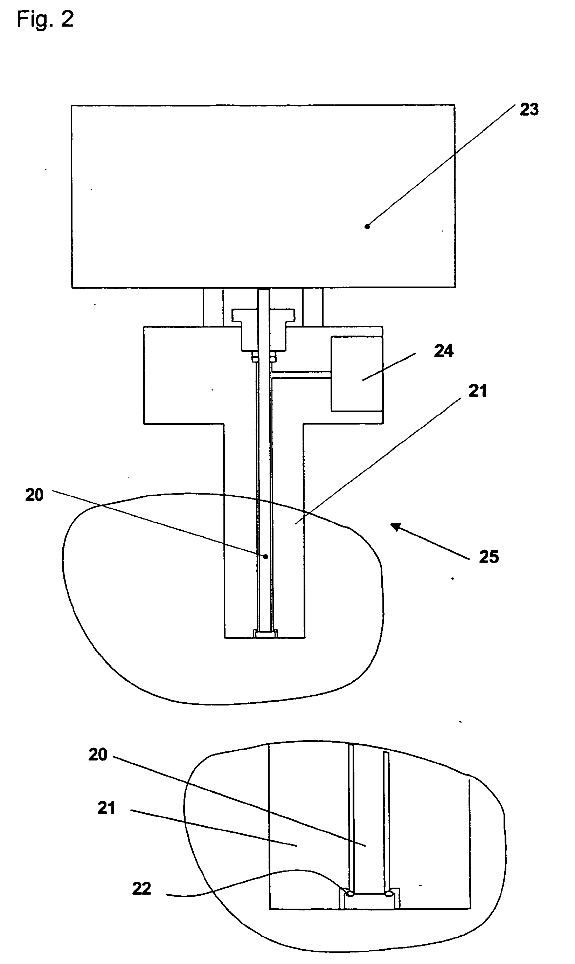

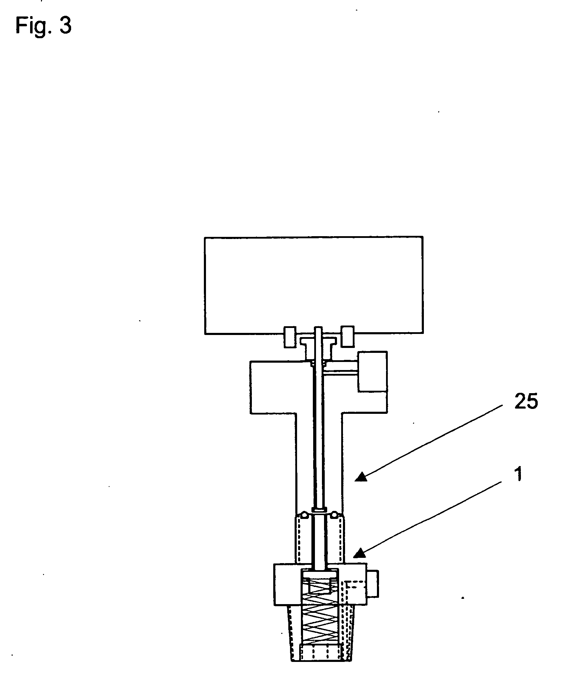

Das Behälterventil zur Flüssigkeitsentnahme verhindert einen Flüssigkeitseinschluß zwischen Anschlußventil 25 (s. Fig. 2) und Behälterventil 1. Wenn das Behälterventil geschlossen wird, öffnet sich die Verbindung zum Gasraum des Behälters. Flüssiges Ammoniak kann somit während des Schließvorgangs in den Behälter zurücklaufen. Der Schließvorgang ist vorzugsweise über eine Drossel zeitverzögert, somit verbleibt immer genügend Zeit die Flüssigkeit vollständig aus dem Anschlußbereich zu entfernen. In Fig. 1 ist der fast geschlossene Zustand des Behälterventils dargestellt. Das Schließelement 2 wird über den Druck des Ammoniaks und über eine zusätzliche Feder 11 auf die Bohrung (Ventilsitz) gepresst und schließt damit das Behälterventil. Zum Öffnen des Behälterventiles (siehe Fig. 2 und 3) wird der Ventilstößel 20 des Anschlußventiles 25 nach unten bewegt, gleichzeitig wird damit am Anschlußventil (Fig. 2) der Stößel 20 mit seinem Dichtring ebenfalls nach unten bewegt und öffnet somit auch das Anschlußventil. Solange der volle Hub des Behälterventils noch nicht erreicht ist, kann nur gasförmiges Ammoniak entnommen werden. Erst wenn der volle Hub erreicht ist, werden die Bohrungen 4, 4' (Fig. 1) geschlossen und die gasdichte Verbindung zum Steigrohr 16 ist hergestellt.

Mit dieser Ventilkonstruktion kann sichergestellt werden, daß kein flüssiges Ammoniak beim Entkoppeln von Behälterventil und Anschlußventil austritt.

Weiter ist am Ventilkörper 6 des Behälterventils seitlich eine Bohrung 17 (optional) angebracht. Diese ist verbunden mit einem Sicherheitsorgan 19 (z.B. Berstscheibe oder Sicherheitsventil). Hierdurch wird sichergestellt, daß beim Öffnen dieses Sicherheitsorgans kein flüssiger Ammoniak austritt.

Fig. 2 zeigt schematisch ein Anschlußventil 25 (in der Fig. 2 oben) und eine Ausschnittvergrößerung des Anschlußteiles (in der Fig. 2 unten). Das Anschlußventil in Fig. 2 weist einen Grundkörper 21 auf, der einen zentralen axialen Kanal mit einer seitlichen Abzweigung zum Anschluß 24 der Entnahmeleitung enthält. Das Schließelement 20 wird von einem pneumatischen oder elektrischen Steuerkopf 23 betätigt. Das Schließelement 20 trägt am unteren Ende (Kopf) ein Dichtelement 22, das zum Schließen gegen den gegenüberliegenden Ventilsitz gezogen wird. Der Kopf des Schließelementes 20 drückt beim Öffnen bei gekoppeltem Behälterventil gegen den Fortsatz 9 des Schließelementes 2 des Behälterventils, wodurch das Behälterventil geöffnet wird.

Die axiale Bohrung des selbstschließenden Anschlußventils (Fig. 2), in dem das Schließelement 20 angeordnet ist, hat vorzugsweise einen Durchmesser im Bereich zwischen 5 und 10 mm, wobei der Durchflußquerschnitt im Anschlußventil vorteilhaft kleiner ist als im Behälterventil, z.B. im Bereich zwischen 2 und 20 mm², inbesondere zwischen 2 und 6 mm².

Fig. 3 zeigt das Ventilsystem mit gekoppeltem selbstschließenden Anschlußventil 25 und selbstschließenden Behälterventil 1.
Das Anschlußventil 25 wird nicht wie bei herkömmlichen selbstschließenden Schnellschlußventilen automatisch das Behälterventil 1 öffnen, sondern dies geschieht erst durch die elektrische oder pneumatische Ansteuerung. Das heißt das Behälterventil ist immer nur dann geöffnet, wenn Produkt entnommen werden soll.

Bei einem Kraftfahrzeug bedeutet dies, die Ammoniak-Entnahme erfolgt immer nur dann, wenn das Fahrzeug in Betrieb ist. Bei einem Unfall (z. B. wenn der Airbag ausgelöst wird oder wenn das Fahrzeug zum Stillstand kommt) oder bei einer Undichtigkeit (die z.B. durch einen Sensor registriert wird) kann automatisch das Ventilsystem geschlossen werden und ein sicheres Betreiben der Entnahme wird hierdurch gewährleistet. Durch diese Ventilanordnung und der Ventilkonstruktion wird außerdem sichergestellt, daß das Totraumvolumen so klein gehalten werden kann, daß beim Lösen der Verbindung nur so viel Gas austreten kann, das speziell bei Ammoniak unterhalb der maximalen Arbeitsplatzkonzentration liegt. Das heißt, es kann nur die Menge austreten , die zwischen dem selbstschließenden Behälterventil und dem Anschlußventil gasförmig vorhanden ist. im konkreten Fall ist z.B. das geometrische Volumen des Ringspaltes 0,215 cm³. Wenn dieses Volumen mit Gas gefüllt ist, (Gasdichte bei 20 °C: 5,767 g/l) beträgt die austretende Masse nur 9,9 mg Ammoniak. Die maximale Arbeitsplatzkonzentration (MAK) beträgt für Ammoniak 17,5 mg/ m³. In Beispielsfall würde beim Öffnen der Verbindung unter diesen Bedingungen der MAK-Wert unterschritten. Diese Fallbetrachtung geht jedoch davon aus, daß der Vorratsbehälter in einem Zustand entkoppelt wird in der noch Flüssigkeit vorhanden ist, im Normalfall sind die Vorratsbehälter jedoch nur bis auf eine Restmenge von ca. 1,5 bis 2 bar mit gasförmigem Inhalt gefüllt. Dies würde bedeuten durch die besondere Ventilkonstruktion und durch das Verfahrensprinzip die austretende gasförmige Menge bei ca. 2,4 mg liegen würde. In diesem Fall liegt man nicht nur deutlich unter dem MAK-Wert, sondern man liegt auch noch unter der Geruchsschwelle des Ammoniaks von ca. 2 bis 4 mg/m³.

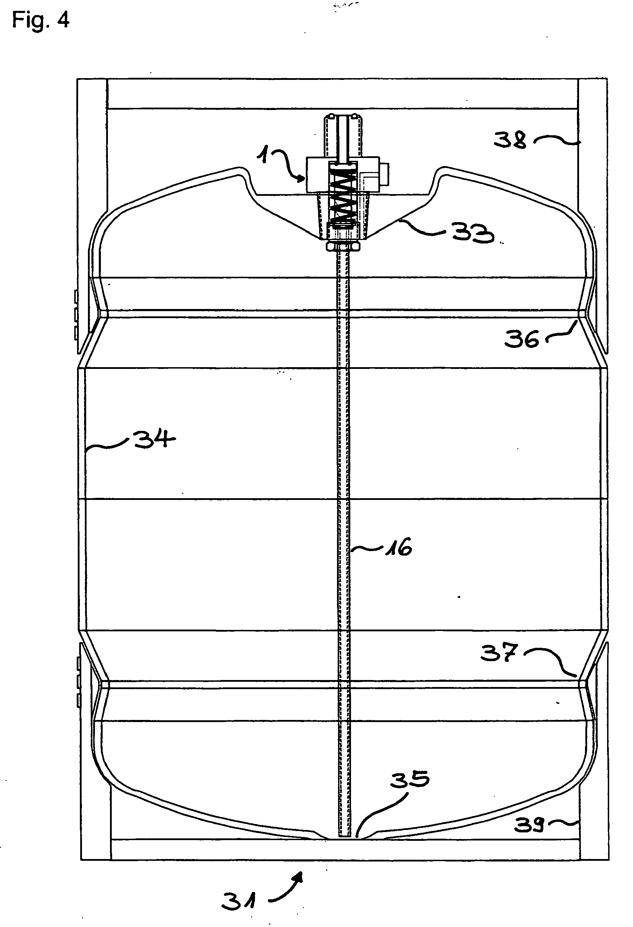

Fig. 4 zeigt eine bevorzugte Ausführung eines Vorratsbehälter für die Entnahme von flüssigem Ammoniak (Längsschnitt). Der Vorratsbehälter 31 weist eine zentrale Mulde 33 mit dem Behälterventil 1 an der Oberseite des Behälters auf. Die Mulde 33 nimmt das Behälterventil 1 weitgehend oder vollständig auf und schützt damit das Ventil. Außerdem erlaubt die Mulde 33 mit dem in den Behälterbereich verlagerten Ventil eine günstige Bauhöhe und kompakte Bauweise. Das Behälterventil 1 weist ein Steigrohr 16 für die Flüssigentnahme auf, das bis zum Boden des Behälters reicht. Die Behälterwand 34 besteht vorzugsweise aus Edelstahl. Der Behälter 31 wird vorteilhaft durch Kaltverformung von Edelstahl hergestellt, was die Festigkeit erhöht. Im Bodenbereich weist der Behälter 31 eine zentrale Mulde 35 auf. Der Behälter weist vorteilhaft eine obere (36) und eine untere Einschnürung oder Vertiefung 37 auf, in die ein Kopfring 38 und ein Fußring 39 greifen. Kopf- und Fußring sind vorzugsweise abnehmbar und bestehen in der Regel aus Kunststoff. Der Behälter hat z.B. einen Außendurchmesser im Bereich von 270 bis 300 mm, eine Behälterhöhe von 350 bis 380 mm und ein Volumen von ca. 20 Liter.

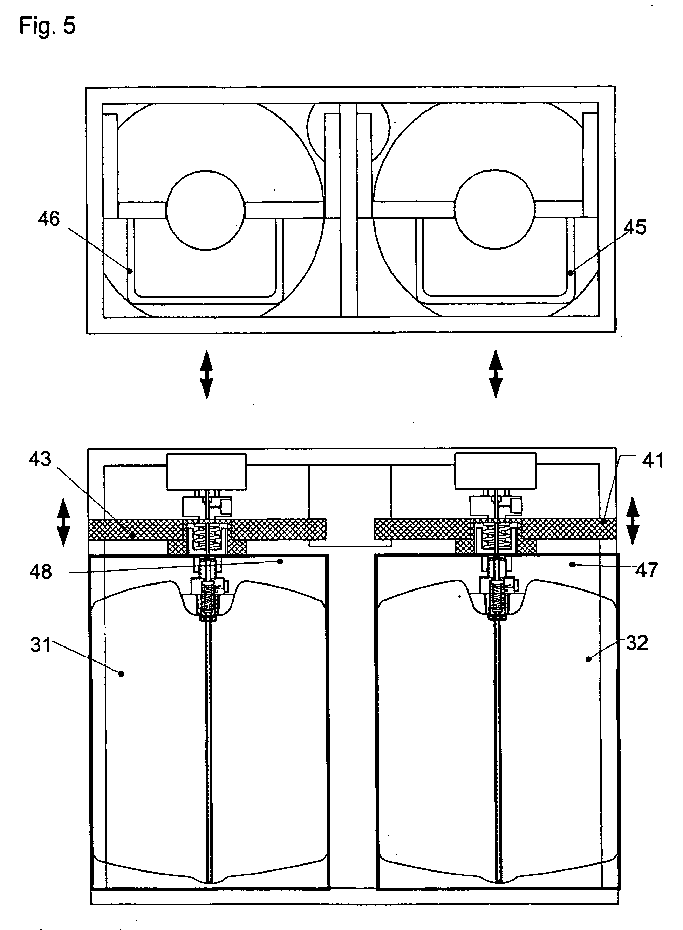

Fig. 5 zeigt ein Beispiel einer Aufnahmevorrichtung für die austauschbaren Vorratsbehälter 31, 32. Ein austauschbarer Vorratsbehälter 31, 32 wird in eine Aufnahmevorrichtung eingestellt, die für eine genaue Positionierung des Vorratsbehälters sorgt. Erst wenn dies erfolgt ist, läßt sich der Anschluß über die Anschlußköpfe 41 oder 43 herstellen, die die Anschlußventile tragen. Dies geschieht durch eine mechanische Bewegung des Anschlußkopfes. Hierzu wird z.B. ein Hebel 45, 46 (Fig. 5 oben) nach unten bewegt und stellt so den gasdichten Anschluß zum Behälter her. Die Hebelstellung wird entweder direkt am Gestell arretiert oder direkt an dem Behälterventil über eine Klauenkupplung. Der Vorratsbehälter ist sofort nach der Adaptierung betriebsbereit. Die Adaptierung wird zusätzlich mechanisch gegen unbeabsichtigtes Öffnen gesichert. Ein Stift ist über einen elektrischen Kontakt verriegelt, d.h. bei nicht eingestecktem Stift läßt sich das Behälterventil nicht öffnen. Dadurch wird sichergestellt , daß der Vorratsbehälter erst dann geöffnet werden kann, wenn die Verbindung hergestellt ist. Wird der Vorratsbehälter während eines Betriebs entfernt, wird automatisch das Behälterventil geschlossen. Dies wird entweder über den elektrischen Kontakt ausgelöst oder über einen pneumatischen Schalter, der mechanisch über Bewegung der Hebel 45 oder 46 ausgelöst wird. Das flüssige Ammoniak wird über die Entnahmeeinrichtung entnommen und dem Verdampfer zugeleitet. Das gasförmige Ammoniak wird über eine Druckreduziereinheit auf einen Druck von 1,1 bis 5 bar, vorzugsweise einen Druck von 1,1 bis 3 bar, im speziellen Fall von 1,5 bar, eingestellt. Mit diesem Druck wird das Ammoniak gasförmig der eigentlichen Dosiereinrichtung des Abgaskatalysatorsystems zur Verfügung gestellt.

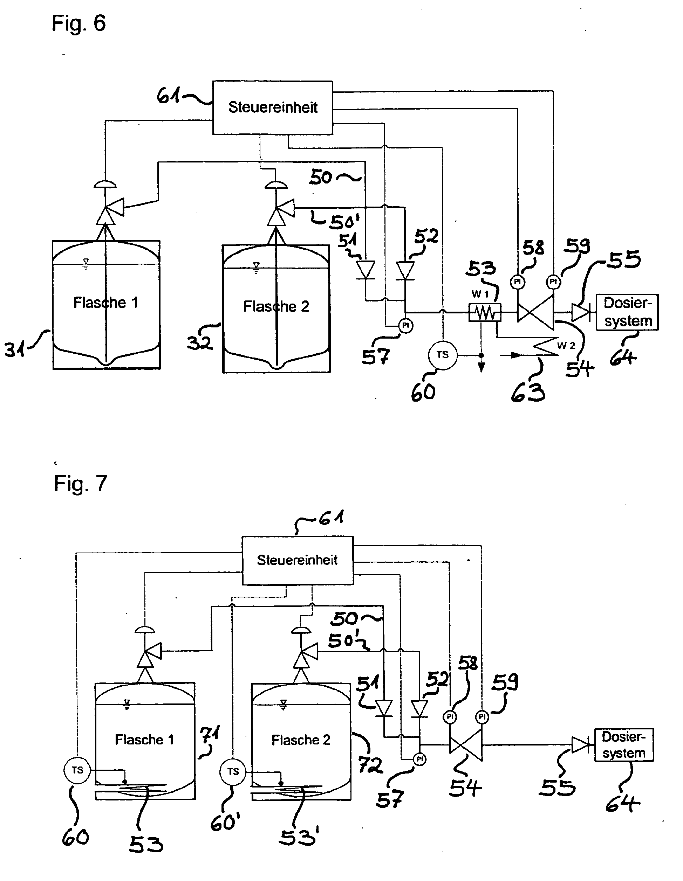

Das Schema in Fig. 6 zeigt ein bevorzugtes Versorgungssystems zur Entnahme von flüssigem Ammoniak. Die Vorratsbehälter 31 und 32 des Versorgungssystems sind austauschbar über ein Ventilsystem in dem Flüssigammoniakversorgungversorgungssystem angeordnet (aufrecht stehende Vorratsbehälter; Behälterventil oben). Die Vorratsbehälter 31 und 32 werden wechselweise betrieben, das heißt bei Entleerung eines Vorratsbehälters wird auf den zweiten Vorratsbehälter umgeschaltet. Der entleerte Vorratsbehälter kann dann ausgetauscht werden. Die Vorratsbehälter 31 und 32 sind für die Entnahme von Flüssigkeit ausgelegt und weisen ein mit dem Behälterventil verbundenes Steigrohr aus, das bis in Bodennähe in eine zentrale Mulde am Behälterboden reicht. Mit diesen Vorratsbehältern kann die Flüssigkeit praktisch restlos entnommen werden. In den an den Anschlußventilen angeschlossenen Entnahmeleitungen 50, 50' sind Rückschlagventile 51, 52 angeordnet. Die Flüssigkeit (Flüssiggas, insbesondere flüssiges Ammoniak) gelangt durch die Leitung 50 oder 50', je nach Ansteuerung der Ventilsysteme, zum Verdampfer 53, wo die Flüssigkeit verdampft wird. Nach dem Verdampfer 53 (externes Heizelement; Wärmetauscher) gelangt gasförmiges Ammoniak zu einem beheizbaren Druckminderer 54 (Druckregler), der gasförmiges Ammoniak mit einem vorbestimmten Druck abgibt. Der Verdampfer 53 ist oberhalb des maximalen Füllstandes der Vorratsbehälter 31, 32 angeordnet, so daß ein Fluten des Verdampfers mit flüssigem Ammoniak nicht eintreten kann. Vor- (Entnahmedruck) und Hinterdruck (Abgabedruck), insbesondere der Druck an Ein- und Ausgang des Druckreglers 54, werden über Druckmeßgeräte 58, 59 erfaßt und die Druckwerte als Signale an eine Steuereinheit 61 geleitet. Am Ausgang des Druckreglers 54 ist vorzugsweise ein Absperrventil 55 angeordnet. Das gebildete Gas wird in der Regel einem Dosiersystem 64 zugeführt, das in Abgaskatalysatorsystemen für Kraftfahrzeuge, insbesondere Lkw, gasförmiges Ammoniak in den Abgasstrom dosiert. Die Steuereinheit 61 ist vorzugsweise eine zentrale Steuereinheit, die die Vorgänge in Flüssigammoniakversorgungversorgungssystem und Abgaskatalysatorsystem steuert.

Sobald der Druck im Vorratsbehälter (z.B. 31) unter den minimalen Druck von 1-3 bar, vorzugsweise 1,5 bar absinkt, wird automatisch das Behälterventil geschlossen. Vorzugsweise veranlaßt die Steuereinheit 61 die Meldung "Behälter wechseln". Der zweite Vorratsbehälter (z.B. 32) wird automatisch geöffnet. Über die Steuereinheit 61 ist vorgesehen, daß über eine Verzögerungseinheit die Umschaltung auf den zweiten Vorratsbehälter (z.B. 32) erfolgen kann, ohne daß Gasmangel gemeldet (angezeigt) und die Ammoniak-Dosierung (über Dosiereinheit 64) im Abgaskatalysatorsystem vollständig unterbrochen wird. Der Wärmetauscher 53 (Verdampfer) wird vorzugsweise direkt mit dem ungeregelten Kühlwasserkreislauf 63 betrieben. Eine Temperaturerhöhung über 70 °C kann bei dieser Verfahrensweise ausgeschlossen werden, da bei dieser Verfahrensweise eine Selbstregelung vorliegt. Ein Temperaturfühler 60 am Wärmetauscher 53 überwacht eine mögliche Überflutung des Wärmetauschers mit flüssigem Ammoniak. Das heißt, das pneumatisch oder elektrisch gesteuerte Anschlußventil wird erst dann geöffnet, wenn der Wärmetauscher 53 eine Temperatur von z.B. mindestens 10°C über der Außentemperatur hat. Zwischen Rückschlagventile 51, 52 und Wärmetauscher 53 ist vorteilhaft ein Druckmeßgerät 57 angeordnet.

Fig. 7 zeigt ein Schema eines Versorgungssystems zur Entnahme von gasförmigem Ammoniak aus den Vorratsbehältern 71 und 72 des Versorgungssystems. Das Versorgungssystem ist analog zu dem System für die Flüssigentnahme aufgebaut. Statt eines externen Heizelementes (Verdampfer) enthält das System ein internes oder externes Heizelement (Wärmezuführelement) an den austauschbaren Vorratsbehältern.

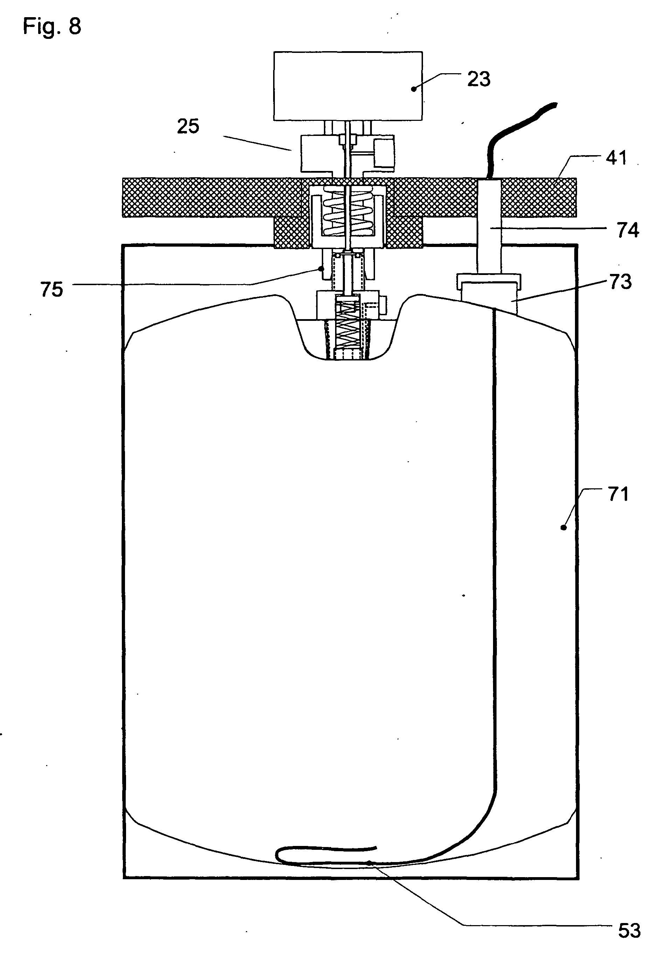

Wird Ammoniak gasförmig aus dem Behälter entnommen, wird die erforderliche Wärmemenge vorzugsweise über eine elektrische Beheizung, die im Vorratsbehälter angebracht ist, eingebracht. Auch eine außenliegende elektrische Beheizung kann eingesetzt werden. Ebenfalls kann eine thermische Heizung am Boden des Behälters 71, 72 angebracht sein. Die Verdampferleistung wird über den Druck am Eingang zur Dosierung 64 geregelt. Zur Absicherung gegen Überhitzung ist vorteilhaft ein weiterer Druckschalter vorhanden. Das Heizsystem 53, 53' (Wärmezuführsystem) wird z. B. nur dann freigeschaltet, wenn beide Druckanzeigen einen Wert zwischen 1 und 8 bar vorzugsweise einen Wert zwischen 2 und 5 bar im speziellen einen Wert von 2,5 bar unterschreitet. Vorzugsweise wird eine weitere Absicherung wird von einem integrierten Temperaturfühler 60, 60' an der Behälter übernommen. Wenn dieser Fühler 60, 60' eine Temperatur Zwischen 40 und 70 °C anzeigt, vorzugsweise eine Temperatur von 50°C wird das Heizsystem 53, 53' abgeschaltet. Beim Einsatz einer thermischen Heizung übernimmt die Abschaltung ein Magnetventil, welches aus Sicherheitsgründen redundant vorhanden ist. Der Anschluß der elektrischen Versorgungs- und Meßleitungen erfolgt hier über einen fest am Behälter integrierten Steckkontakt. Dieser Steckkontakt ist vorteilhaft an der Oberseite des Behälters angebracht (siehe Fig. 8, 73), so daß beim Ankoppeln des Behälters die Verbindung automatisch vorgenommen wird. Dies kann z.B. so geschehen, daß der Behälter im Bodenbereich oder Kopfbereich eine Arretierung aufweist, mit dem der Behälter immer die gleiche Position im Entnahmegestell einnimmt.

Das gasförmige Ammoniak wird über ein Rückschlagventil 51, 52 und einem Druckminderer 54 direkt der Dosierung 64 des angeschlossenen Abgaskatalysatorsystems zugeleitet. Sobald der Druck im Behälter unter den minimalen Dosierdruck von 1-3 bar vorzugsweise 1,5 bar absinkt, wird automatisch das Behälterventil geschlossen und an der Steuereinheit 61 erscheint die Meldung "Behälter wechseln". Der zweite Behälter wird automatisch geöffnet. Über die Steuereinheit ist vorgesehen, daß über eine Verzögerungseinheit die Umschaltung auf den zweiten Behälter erfolgen kann, ohne daß Gasmangel angezeigt und die Versorgung der Dosiereinheit 64 vollständig unterbrochen wird.

Fig. 8 zeigt einen Vorratsbehälter 71 für die Entnahme von gasförmigem Ammoniak (Längsschnitt). In dem Vorratsbehälter 71 ist das innere Heizelement 53 (z.B. elektrisches Heizelement) angeordnet. Das Behälterventil ist z.B. über eine Klauenkupplung 75 mit dem Anschlußventil 25 verbunden. Das Anschlußventil 25 ist an einem Träger 41 (Anschlußkopf) befestigt. Der Vorratsbehälter 71 ist vorteilhaft mit einem elektrischen Steckkontakt 73 für das Heizelement 53 ausgestattet. Der Steckkontakt 73 wird mit dem Steckkopf 74 verbunden, der im Träger 41 befestigt ist.

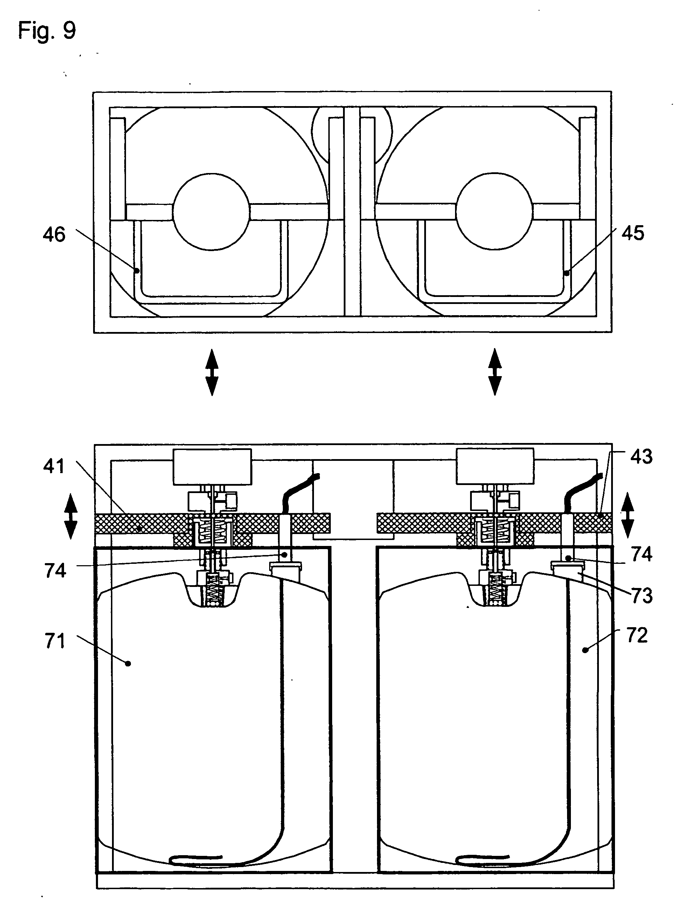

Fig. 9 zeigt eine Aufnahmevorrichtung mit austauschbaren Vorratsbehältern für die gasförmige Entnahme von Ammoniak (Beispiel). Ein austauschbarer Vorratsbehälter 71, 72 wird in die Aufnahmevorrichtung eingestellt. Durch Drehen der Behälter 71, 72 wird die Position für die Adaptierung des Steckkontaktes 73 eingerastet. Erst wenn dies erfolgt ist, läßt sich der Anschluß herstellen. Dies geschieht durch eine mechanische Bewegung des Anschlußkopfes 41. Hierzu wird z.B. ein Hebel 45, 46 nach unten bewegt und stellt so den gasdichten Anschluß zum Behälter her. Die Hebelstellung wird z.B. direkt am Gestell arretiert. Der gasdichte Anschluß von Anschlußventil und Behälterventil kann z.B. über eine Klauenkupplung 75 erfolgen. Gleichzeitig mit dem Gasanschluß über das Ventilsystem wird der elektrische Kontakt über den Steckkopf 74 und Steckkontakt 73 hergestellt. Der Gasbehälter ist sofort nach der Adaptierung betriebsbereit. Die Adaptierung wird vorzugsweise zusätzlich mechanisch gegen unbeabsichtigtes Öffnen gesichert. Der mechanische Stift ist über eine elektrischen Kontakt verriegelt, d.h. bei nicht eingestecktem Stift läßt sich der Behälter nicht öffnen. Dadurch wird sichergestellt , das der Behälter 71, 72 erst dann geöffnet werden kann, wenn die Verbindung hergestellt ist. Wird ein Behälter während eines Betriebs entfernt, wird automatisch das Behälterventil geschlossen. Dies wird entweder über den elektrischen Kontakt ausgelöst oder über einen pneumatischen Schalter der mechanisch über Hebelbewegung (Hebel 45, 46) ausgelöst wird. Das gasförmige Ammoniak wird über die Entnahmeeinrichtung entnommen und über eine Druckreduziereinheit 54 auf einen Druck von 1,1 bis 5 bar vorzugsweise eine Druck von 1,5 bis 3 bar, insbesondere 2 bar eingestellt. Mit diesem Druck wird das Ammoniak gasförmig der eigentlichen Dosiereinrichtung 64 eines Abgaskatalysatorsystems eines Kraftfahrzeuges (z.B. Lkw) zur Verfügung gestellt.

## Patentansprüche

1. Ammoniak-Versorgungssystem für Abgaskatalysatorsysteme für Kraftfahrzeuge, enthaltend eine Quelle für flüssiges Ammoniak, **gekennzeichnet durch** einen austauschbaren Vorratsbehälter (31, 32, 71, 72) mit flüssigem Ammoniak als Quelle für flüssiges Ammoniak, eine Entnahmevorrichtung für flüssiges Ammoniak, die im Bereich der Quelle für flüssiges Ammoniak angeordnet ist, und ein Heizelement (53), das außerhalb des Vorratsbehälters (31, 32, 71, 72) angeordnet ist, wobei die Entnahmevorrichtung ein Ventilsystem umfasst, bestehend aus einem Anschlußventil (25) und einem Behälterventil (1), wobei die Ventile (25, 1) koppelbar sind, das Anschlußventil (25) ein Absperrorgan und ein Element zum Öffnen (20) des Behälterventils (1) aufweist und das Behälterventil (1) an einem austauschbaren Vorratsbehälter (31, 32, 71, 72) mit flüssigem Ammoniak angeordnet ist, wobei das Behälterventil (1) einen Schließkörper (12) mit einem oberen (2) und unteren Schließelement (13) aufweist, wobei der Vorratsbehälter (31, 32, 71, 72) austauschbar ist und ein Behälterventil (1) mit einem Schließkörper (12) mit einem oberen (2) und unteren Schließelement (13), ein Steigrohr (16) und im Bodenbereich eine zentrale Mulde (35) aufweist.

2. System nach Anspruch 1, **gekennzeichnet durch** ein Behälterventil (1) mit einem durchlässigen oder teildurchlässigen Schließkörper (12).

## Claims

1. Ammonia supply system for exhaust systems for motor vehicles, comprising a source for liquid ammonia, **characterised by** an exchangeable storage container (31, 32, 71, 72) with liquid ammonia as source for liquid ammonia, an extraction device for liquid ammonia, which is disposed in the region of the source for liquid ammonia, and a heating element (53), which is disposed outside the storage container (31, 32, 71, 72), wherein the extraction device comprises a valve system comprising a connecting valve (25) and a container valve (1), wherein the valves (25, 1) can be coupled, the connecting valve (25) comprises a shut-off device and an element for opening (20) the container valve (1) and the container valve (1) is disposed at an exchangeable storage container (31, 32, 71, 72) with liquid ammonia, wherein the container valve (1) comprises a closing body (12) with an upper (2) and lower closing element (13), wherein the storage container (31, 32, 71, 72) is exchangeable and comprises a container valve (1) with a closing body (12) with an upper (2) and lower closing element (13), an ascension pipe (16) and in the floor region a central depression (35).

2. System according to claim 1, **characterised by** a container valve (1) with a permeable or partially permeable closing body (12).

## Revendications

1. Système d'alimentation en ammoniac pour des systèmes de catalyseurs de gaz d'échappement pour des véhicules automobiles, contenant une source pour de l'ammoniac liquide, **caractérisé par** un réservoir de stockage échangeable (31, 32, 71, 72) avec de l'ammoniac liquide en tant que source pour de l'ammoniac liquide, un dispositif de prélèvement pour de l'ammoniac liquide, qui est agencé dans la région de la source pour de l'ammoniac liquide et un élément de chauffage (53) qui est agencé à l'extérieur du réservoir de stockage (31, 32, 71, 72), dans quel cas le dispositif de prélèvement comporte un système de vanne, consistant en une vanne de connexion (25) et en une vanne de réservoir (1), les vannes (25, 1) pouvant être couplées, la vanne de connexion (25) présentant un obturateur et un élément pour ouvrir (20) la vanne de réservoir (1) et la vanne de réservoir (1) étant agencée sur un réservoir de stockage échangeable (31, 32, 71, 72) avec de l'ammoniac liquide, la vanne de réservoir (1) ayant un corps de fermeture (12) avec un élément de fermeture supérieur (2) et un élément de fermeture inférieur (13), le réservoir de stockage (31, 32, 71, 72) étant échangeable et présentant une vanne de réservoir (1) avec un corps de fermeture (12) avec un élément de fermeture supérieur (2) et un élément de fermeture inférieur (13), une colonne montante (16) et un creux central (35) dans la région du fond.

2. Système selon la revendication 1, **caractérisé par** une vanne de réservoir (1) avec un corps de fermeture (12) perméable ou partiellement perméable.
